# EUROPÄISCHE PATENTANMELDUNG

(11) **EP 3 838 938 A1**
(43) Veröffentlichungstag der Anmeldung: **23.06.2021**
(21) Anmeldenummer: 19217701.2
(22) Anmeldetag: 18.12.2019
(51) Int. Cl.: C08G 2/08, C08G 2/22, C08G 2/06

(54) **VERFAHREN ZUR HERSTELLUNG VON POLYOXYMETHYLEN-POLYOXYALKYLEN-COPOLYMEREN**

(71) Anmelder: Covestro Deutschland AG, 51373 Leverkusen (DE)
(72) Erfinder: LANGANKE, Jens, 53894 Mechernich (DE); WOLF, Aurel, 42489 Wülfrath (DE); GÜRTLER, Christoph, 50735 Köln (DE)
(74) Vertreter: Levpat

(57) **Zusammenfassung**

Die vorliegende Erfindung betrifft ein Verfahren zur Herstellung eines Polyoxymethylen-Polyoxyalkylen-Copolymers umfassend der Reaktion einer polymeren Formaldehydverbindung mit einem Alkylenoxid in Gegenwart eines Doppelmetallcyanid (DMC)-Katalysators, wobei die polymere Formaldehydverbindung wenigstens eine terminale Hydroxylgruppe aufweist umfassend die Schritte des Vorlegens eines Suspensionsmittels in einem Reaktor und nachfolgender stufenweiser oder kontinuierlicher Zudosierung der polymeren Formaldehydverbindung während der Reaktion in den Reaktor.

## Beschreibung

Die vorliegende Erfindung beschreibt ein Verfahren zur Herstellung von Polyoxymethylen-Polyoxyalkylen-Copolymeren. Sie betrifft weiterhin durch ein solches Verfahren erhältliche Polyoxymethylen-Polyoxyalkylen-Copolymere sowie deren Verwendung.

Copolymere enthaltend Polyoxymethylen-Einheiten neben anderen Polymerisat- und Polykondensat-Einheiten werden beispielsweise in JP 2007 211082 A, WO 2004/096746 A1, GB 807589, EP 1 418 190 A1, US 3,754,053, US 3,575,930, US 2002/0016395, und JP 04-306215 beschrieben.

US 3,575,930 beschreibt die Reaktion von Dihydroxy-terminiertem Paraformaldehyd HO-(CH₂O)ₙ-H mit n = 2-64 mit Diisocyanaten zu Isocyanat-terminierten Polyoxymethylenpolymeren, welche in der Reaktion mit Diolen zu Polyurethanverbindungen umgesetzt werden können.

JP 2007 211082 A beschreibt die Umsetzung von Polyoxyalkylen-Polyolen mit einem Äquivalentgewicht von ≥ 2500 mit Formaldehyd, Formaldehyd-Oligomeren oder Formaldehyd-Polymeren zu Polyoxymethylen-Polyoxyalkylen-Copolymeren unter Anwendung von anionischen oder kationischen Polymerisationskatalysatoren. Die eingesetzten hochmolekularen Polyoxyalkylen-Polyol-Starter mit niedriger Polydispersität werden über Doppelmetallcyanid (DMC)-Katalyse hergestellt. Aufgrund des hohen Molekulargewichtes der Polyoxyalkylen-Polyole weisen die erhaltenen Polyoxymethylen-Polyoxyalkylen-Copolymere ein Molekulargewicht von wenigstens > 5000 g/mol auf und sind daher weniger breit als Polyurethan-Baustein einsetzbar. Weiterhin macht die direkte Umsetzung der Polyoxyalkylen-Polyole mit den Polyoxymethylen-Polymeren über ein Schmelz-Knet-Verfahren den Einsatz von hohen Temperaturen und entsprechenden spezifischen Hochviskosapparaten (Extruder, Kneter, etc.) notwendig.

US 3,754,053 beschreibt Polyoxymethylen-Polyoxyalkylen-Copolymere mit einem Molekulargewicht ≥ 10 000 g/mol. Zur Herstellung von Copolymeren mit einem inneren Polyoxymethylen-Block wird in einem erstem Schritt Trioxan zu einem Polyoxymethylen-Präpolymer umgesetzt und dieses dann in Gegenwart von z.B. NaOH als Polymerisationskatalysator mit Alkylenoxiden umgesetzt. Auch hier sind die beschriebenen Polymere aufgrund ihres hohen Molekulargewichts für Anwendungen als Polyurethanbaustein weniger gut geeignet.

In WO 2004/096746 A1 wird die Reaktion von Formaldehyd-Oligomeren mit Alkylenoxiden und/oder Isocyanaten offenbart. Bei dieser Methode werden über den beschriebenen Einsatz von Formaldehyd-Oligomeren HO-(CH₂O)ₙ-H Polyoxymethylen-Blockcopolymere mit einer relativ engen Molmassenverteilung von n = 2-19 erhalten, wobei für die Bereitstellung der Formaldehyd-Oligomere ausgehend von wässriger Formalinlösung ein zusätzlicher thermischer Abtrenn-Verfahrensschritt erforderlich ist. Die erhaltenen Formaldehyd-Oligomer-Lösungen sind hierbei nicht lagerstabil, so dass diese anschließend sofort weiterverarbeitet werden müssen. Außerdem werden in diesen Anmeldungen keine differenzierten Aktivierungsbedingungen, wie beispielsweise der Aktivierungstemperatur, der verwendeten Alkoxylierungskatalysatoren offenbart, welche auch aus sicherheitstechnischen sowie qualitätsrelevanten Gesichtspunkten für eine mögliche großtechnische Anwendung durch undefinierte Temperaturspitzen während des exothermen Polymerisationsprozesses (22.7 kcal/mol PO from M. Ionescu; Chemistry and Technology of Polyols for Polyurethanes, Rapra Techn. Ltd., 2005) nachteilig sind. Weiterhin sind über diese Methode nur Blockcopolymere mit sehr kurzen Formaldehyd-Blöcken zugänglich.

In EP 1 870 425 A1 wird ein Verfahren zu Herstellung von Polyoxyalkylen-haltigen Polyolen durch Kondensation von substituierten oder unsubstituierten Phenolstrukturen mit Formaldehyden und/oder anderen substituierten Alkanalstrukturen offenbart. Die resultierenden Phenol-Formaldehyd-Kondensate werden hierbei als Polyolstarter für die Alkoxylierung verwendet, wobei innerhalb dieser Starterverbindungen keine Oxymethylen-Wiederholungseinheiten ausgebildet werden. Weiterhin unterscheiden sich die resultierenden Eigenschaften der alkoxylierten, Aromaten-haltigen Poylole aufgrund der unterschiedlichen chemischen Struktur grundlegend von aliphatischen Polyolstrukturen.

In WO2012/091968 A1 wird ein Verfahren zur Herstellung von Polyetherolen durch Polymerisation von Alkylenoxiden an eine Starterverbindungen mithilfe von DMC Katalysatoren beansprucht. Hierbei werden als Formaldehyd-assoziierte Strukturen oligomere Phenol-Formaldehyde Kondensate als entsprechende Starter offenbart, die sich strukturell grundlegend von der Polyoxymethylen-Starterstruktur unterscheidet.

WO2015/155094 A1 offenbart ein Verfahren zur Herstellung von Polyoxymethylen-Blockcopolymeren, umfassend den Schritt der Aktivierung des DMC-Katalysators in Anwesenheit einer OH-terminierten polymeren Formaldehydverbindung mit einer definierten Menge Alkylenoxid, sowie einer optional anschließenden Polymerisation mit Alkylenoxiden, welche ggf. in Anwesenheit von weiteren Comonomeren stattfindet. Hierbei wird in einem ersten Schritt der DMC-Katalysator in Gegenwart der polymeren Formaldehyd-Starterverbindung aktiviert wird, wobei zur Aktivierung des DMC-Katalysators eine Teilmenge (bezogen auf die Gesamtmenge der bei der Aktivierung und Polymerisation eingesetzten Menge an Alkylenoxiden) von einem oder mehreren Alkylenoxiden zugesetzt wird und in einem zweiten Schritt ein oder mehrere Alkylenoxide sowie gegebenenfalls weitere Comonomere zu der aus Schritt (i) resultierenden Mischung zugesetzt werden. Dabei erfolgt die Aktivierung des DMC-Katalysators im ersten Schritt (i) bei einer Aktivierungstemperatur (Tₐₖₜ) von 20 bis 120 °C. Allerdings resultiert für dieses Verfahren eine lange Aktivierungszeit. Darüber hinaus werden auch hohe Katalysatorbeladungen von 10000 ppm und mehr offenbart, wobei diese erhöhten Katalysatormengen bereitgestellt werden müssen und auch nach Herstellung des Polyoxymethylen-Copolymers für nachträgliche Anwendungen abgetrennt werden, um den Anteil des Schwermetallhaltigen Doppelmetallcyanidkatalysators zu reduzieren. Aufgrund dieses semi-batch Verfahrens wird auch die gesamte Menge der polymeren Formaldehyd-Starterverbindung vorgelegt, so dass für das Reaktionsgemisch und die partiell-alkoxylierten Zwischenspezies im Vergleich zu konventionellen Polyetherpolyol-Herstellungsverfahren mit vergleichbaren Äquivalenzgewichten sehr hohe Viskositäten speziell für die Suspension aus der polymeren Formaldehyd-Starterverbindung und dem Suspenstionsmittel resultieren. Hierfür sind spezielle Rührergeometrien und Leistungseinträge notwendig, welche in kommerziell verfügbaren Polyol-Anlagen teilweise nicht verfügbar sind und aufwendig installiert werden müssten. Darüber hinaus resultiert aufgrund der höheren Mengen an statischem, gasförmigem Alkylenoxid, wie beispielsweise Propylenoxid, ein höheres Druckbildungspotential im Falle einer Anlagenstörung. Dies bedingt wiederum erhöhte apparative und organisatorische Sicherheitsanforderungen.

Ausgehend vom Stand der Technik ergab sich daher die Aufgabe ein einfaches und wirtschaftlich vorteilhaftes Verfahren zur Herstellung von Polyoxymethylen-Polyoxyalkylen-Copolymeren auf Basis von oligomeren und polymeren Formen des Formaldehyds als Startersubstanz zur Verfügung zu stellen, mit dem die sich aus dem Stand der Technik ergebenden Probleme überwunden werden können.

Dabei soll die Menge des Doppelmetallcyanid (DMC)-Katalysators im Herstellungsverfahrens reduziert werden, sowie die Konzentration der polymeren Formaldehyd-Starterverbindung in der Reaktionsmischung reduziert werden, damit das Verfahren auch in konventionellen Polyol-Reaktoren mit konventionellen Rührergeometrien und Leistungseinträgen ermöglicht wird. Weiterhin soll auch die Menge an statischem Alkylenoxid reduziert werden, um die Prozesssicherheit zu erhöhen. Eine weitere Aufgabe besteht auch darin, den Anteil an ungewünschten niedermolekularen Nebenprodukten mit Formiat und Methoxy-Endgruppen zu reduzieren.

Erfindungsgemäß gelöst wird diese Aufgabe durch ein Verfahren zur Herstellung eines Polyoxymethylen-Polyoxyalkylen-Copolymers umfassend der Reaktion einer polymeren Formaldehydverbindung mit einem Alkylenoxid in Gegenwart eines Doppelmetallcyanid (DMC)-Katalysators;
wobei die polymere Formaldehydverbindung wenigstens eine terminale Hydroxylgruppe aufweist;
umfassend folgende Schritte:
(α) ein Suspensionsmittel, dass in einem Reaktor vorgelegt wird und
(γ) die polymere Formaldehydverbindung während der Reaktion stufenweise oder kontinuierlich in den Reaktor zudosiert wird.

Die Verwendung des Worts ein im Zusammenhang mit zählbaren Größen ist hierbei und im Folgenden nur dann als Zahlwort zu verstehen, wenn dies aus dem Zusammenhang hervorgeht (bspw. durch die Formulierung "genau ein"). Ansonsten umfassen Ausdrücke wie "ein Alkylenoxid", "eine polymere Formaldehydverbindung" etc. immer auch solche Ausführungsformen, in denen zwei oder mehr Alkylenoxide, zwei oder mehr polymere Formaldehydverbindungen etc. eingesetzt werden.

Nachfolgend wird die Erfindung im Detail erläutert. Verschiedene Ausführungsformen sind dabei beliebig miteinander kombinierbar, solange sich für den Fachmann aus dem Kontext nicht eindeutig das Gegenteil ergibt.

Polyoxymethylen-Copolymere im Sinne der Erfindung bezeichnen polymere Verbindungen, die Polyoxymethylen-Einheiten sowie Polyoxyalkylen und/oder einen Polyoxyalkylencarbonat-Einheiten enthalten.

In einer Ausführungsform des erfindungsgemäßen Verfahrens weist das Polyoxymethylen-Polyoxyalkylen-Copolymers ein zahlenmittleres Molekulargewicht von 1000 g/mol bis 10000 g/mol, bevorzugt von 1000 g/mol bis 8400 g/mol auf, wobei das zahlenmittlere Molekulargewicht mittels Gel-Permeations-Chromatographie (GPC) in Anlehnung an DIN 55672-1: "Gelpermeationschromatographie, Teil 1 - Tetrahydrofuran als Elutionsmittel" bestimmt wurde, wobei Polystyrolproben bekannter Molmasse zur Kalibrierung verwendet wurden.

Die erhaltenen Polyoxymethylen-Copolymere bieten gegenüber existierenden Polymeren eine Reihe von Vorteilen. So können bestimmte physikalische Eigenschaften wie Glasübergangstemperaturen, Schmelzbereiche, Viskositäten und Löslichkeiten, etc. über die Länge der Polyoxymethylen-Blöcke im Verhältnis zu den oligomeren Polyoxyalkylen-Blöcken gezielt angesteuert werden.

Gegenüber Polyoxymethylen-Homopolymeren gleichen Molekulargewichts ist die Teilkristallinität in den erfindungsgemäßen Polyoxymethylen-Polyoxyalkylen-Copolymeren typischerweise herabgesetzt, was üblicherweise ebenfalls zu einer Herabsetzung von Glasübergangstemperaturen, Schmelzpunkten und Viskositäten, etc. führt. Die Anwesenheit von zusätzlichen Polyoxyalkylenblöcken führt weiterhin typischerweise zu einer deutlichen Erhöhung der chemischen und thermischen Stabilität. Zudem weisen die erhaltenen Polyoxymethylen-Polyoxyalkylen-Copolymere im Allgemeinen gute Löslichkeiten in diversen Lösungsmitteln auf, sind zumeist leicht und ohne Massenverlust aufschmelzbar oder liegen schon bei niedrigen Temperaturen im flüssigen Zustand vor. Gegenüber Polyoxymethylen-Homopolymeren zeigen die Polyoxymethylen- Polyoxyalkylen-Copolymere somit eine deutlich bessere Verarbeitbarkeit.

Gegenüber Polyetherpolyolen gleichen Molekulargewichts ist der Anteil an Polyoxyalkylen-Einheiten, die aus den entsprechenden Alkylenoxiden hergestellt werden, um den Polyoxymethylen-Anteil verringert, was zu einer vorteilhaften Wirtschaftlichkeit des Produktes beiträgt. Diverse physikalische Eigenschaften wie Glasübergangstemperaturen, Schmelzbereiche, Viskositäten, Löslichkeit, etc. können für ein gegebenes Molekulargewicht über die Länge der Polyoxymethylen-Blöcke im Verhältnis zu den Polyoxyalkylen-Blöcken, sowie über das Molekulargewicht der eingesetzten polymeren Formaldehydverbindung (Polyoxymethylen-Block), gezielt angesteuert werden.

Dies kann in vorteilhaften physikalischen Eigenschaften insbesondere von Folgeprodukte dieser Polymere resultieren und somit neue Anwendungen ermöglichen.

Ein Polyoxymethylen-Block im Sinne der Erfindung bezeichnet eine polymere Struktureinheit - (CH2-O-)x wobei x für eine ganze Zahl ≥ 2 steht, die mindestens eine an zwei Sauerstoffatome gebundene CH2-Gruppe enthält, welche über mindestens eines der Sauerstoffatome mit weiteren Methylengruppen oder anderen polymeren Strukturen verbunden ist. Bevorzugt enthalten Polyoxymethylen-Blöcke -(CH2-O-)x durchschnittlich x ≥ 2 bis x ≤ 1000, mehr bevorzugt durchschnittlich x ≥ 2 bis x ≤ 400 und besonders bevorzugt durchschnittlich x ≥ 8 bis x ≤ 100 Oxymethylen-Einheiten. Im Sinne der Erfindung werden unter einem Polyoxymethylen-Block auch solche Blöcke verstanden, welche geringe Anteile weiterer monomerer und/oder oligomerer Einheiten enthalten, im Allgemeinen weniger als 25 mol% bezogen auf die Gesamtmenge der im Block enthaltenen Monomereinheiten.

Polyoxyalkylen-Blöcke im Sinne der Erfindung sind im Sinne der vorliegenden Erfindung auch solche Blöcke, in welche (geringe) Anteile weiterer Comonomere, im Allgemeinen weniger als 50 mol-%, bevorzugt weniger als 25 mol-%, bezogen auf die Gesamtmenge aller im oligomeren Block vorliegenden Wiederholungseinheiten, einpolymerisiert sind. In einer Ausführungsform des erfindungsgemäßen Verfahrens können diese Polyoxyalkylen-Blöcke beispielsweise durch Ringöffnung und anschließender Polymerisation von Propylenoxid und/oder Ethylenoxid unter Bildung von Polyether-Einheiten erfolgen, wobei diese Hydroxy-Gruppen terminiert sind. In einer weiteren Ausführungsform des erfindungsgemäßen Verfahrens können diese Polyoxyalkylen-Blöcke beispielsweise durch Ringöffnung und anschließender Polymerisation von Propylenoxid und/oder Ethylenoxid in Gegenwart von Kohlendioxid (Kohlenstoffdioxid, CO2) unter Bildung von Polyether sowie Carbonat Einheiten (Polyethercarbonat) erfolgen.

Der Begriff "Alkyl" umfasst allgemein im Zusammenhang der gesamten Erfindung Substituenten aus der Gruppe n-Alkyl wie Ethyl oder Propyl, verzweigtes Alkyl und/oder Cycloalkyl. Der Begriff "Aryl" umfasst allgemein im Zusammenhang der gesamten Erfindung Substituenten aus der Gruppe einkernige Carbo- oder Heteroarylsubstituenten wie Phenyl und/oder mehrkernige Carbo- oder Heteroarylsubstituenten, die gegebenenfalls mit weiteren Alkylgruppen und/oder Heteroatomen wie Stickstoff, Sauerstoff, Silizium, Schwefel oder Phosphor substituiert sein können. Die Reste R1, R2, R3 und/oder R4 können innerhalb einer Wiederholungseinheit so miteinander verknüpft sein, dass sie zyklische Strukturen ausbilden, wie beispielsweise einen Cycloalkyl-Rest, der über zwei benachbarte Kohlenstoffatome in die Polymerkette eingebaut ist.

Im erfindungsgemäßen Verfahren wird ein Suspensionsmittel in einem Reaktor vorgelegt.

In einer Ausführungsform des erfindungsgemäßen Verfahrens enthält das Suspensionsmittel in Schritt (α) keine H-funktionellen Gruppen.

Vorzugsweise wird in Schritt (α) ein Suspensionsmittel, das keine H-funktionellen Gruppen enthält, im Reaktor gemeinsam mit DMC-Katalysator vorgelegt, und dabei wird keine polymere Formaldehydverbindung im Reaktor vorgelegt. Alternativ können auch in Schritt (α) ein Suspensionsmittel, das keine H-funktionellen Gruppen enthält, und zusätzlich eine Teilmenge der polymeren Formaldehydverbindung sowie gegebenenfalls DMC-Katalysator im Reaktor vorgelegt werden.

In einer bevorzugten Ausführungsform wird in das resultierende Gemisch aus Suspensionsmittel und DMC-Katalysator bei einer Temperatur 50 bis 120 °C bevorzugt von 60 bis 110 °C und besonders bevorzugt von 70 bis 100 °C Inertgas (beispielsweise Argon oder Stickstoff), ein Inertgas-Kohlendioxid-Gemisch oder Kohlendioxid eingeleitet und gleichzeitig ein reduzierter Druck (absolut) von 10 mbar bis 800 mbar, besonders bevorzugt von 50 mbar bis 200 mbar angelegt.

In einer alternativen bevorzugten Ausführungsform wird das resultierende Gemisch aus Suspensionsmittel und DMC-Katalysator bei einer Temperatur von 50 bis 120 °C bevorzugt von 60 bis 110 °C und besonders bevorzugt von 70 bis 100 °C mindestens einmal, vorzugsweise dreimal mit 1,5 bar bis 10 bar (absolut), besonders bevorzugt 3 bar bis 6 bar (absolut) eines Inertgases (beispielsweise Argon oder Stickstoff), eines Inertgas-Kohlendioxid-Gemisches oder Kohlendioxid beaufschlagt und jeweils anschließend der Überdruck auf ca. 1 bar (absolut) reduziert.

Der DMC-Katalysator kann in fester Form oder als Suspension in einem Suspensionsmittel bzw. in einer Mischung aus mindestens zwei Suspensionsmitteln zugegeben werden.

In einer weiteren bevorzugten Ausführungsform wird in Schritt (α)
(α-I) das Suspensionsmittel oder ein Gemisch aus mindestens zwei Suspensionsmitteln vorgelegt und
(α-II) die Temperatur des Suspensionsmittels oder des Gemisches aus mindestens zwei Suspensionsmittel auf 50 bis 120 °C bevorzugt von 60 bis 110 °C und besonders bevorzugt von 70 bis 100 °C gebracht und/oder der Druck im Reaktor auf weniger als 500 mbar, bevorzugt 5 mbar bis 100 mbar erniedrigt, wobei gegebenenfalls ein Inertgas-Strom (beispielsweise von Argon oder Stickstoff), ein Inertgas-Kohlendioxid-Strom oder ein Kohlendioxid-Strom durch den Reaktor geleitet wird,
wobei der Doppelmetallcyanid-Katalysator zum Suspensionsmittel oder zum Gemisch aus mindestens zwei Suspensionsmitteln in Schritt (α-I) oder unmittelbar anschließend in Schritt (α-II) zugesetzt werden, und wobei das Suspensionsmittel keine H-funktionellen Gruppen enthält.

Schritt (β) dient der Aktivierung des DMC-Katalysators. Dieser Schritt kann gegebenenfalls unter Inertgasatmosphäre, unter einer Atmosphäre aus Inertgas-Kohlendioxid-Gemisch oder unter einer Kohlendioxid-Atmosphäre durchgeführt werden. Als Aktivierung im Sinne dieser Erfindung wird ein Schritt bezeichnet, bei dem eine Teilmenge Alkylenoxidverbindung bei Temperaturen von 50 bis 120 °C bevorzugt von 55 bis 110 °C und besonders bevorzugt von 60 bis 100 °C zur DMC-Katalysator-Suspension zugegeben wird und dann die Zugabe der Alkylenoxidverbindung unterbrochen wird, wobei aufgrund einer folgenden exothermen chemischen Reaktion eine Wärmeentwicklung, die zu einer Temperaturspitze ("Hotspot") führen kann, sowie aufgrund der Umsetzung von Alkylenoxid und gegebenenfalls CO₂ ein Druckabfall im Reaktor beobachtet wird. Der Verfahrensschritt der Aktivierung ist die Zeitspanne von der Zugabe der Teilmenge an Alkylenoxidverbindung, gegebenenfalls in Gegenwart von CO₂, zum DMC-Katalysator bis zum Auftreten der Wärmeentwicklung. Gegebenenfalls kann die Teilmenge Alkylenoxidverbindung in mehreren Einzelschritten, gegebenenfalls in Gegenwart von CO₂, zum DMC-Katalysator gegeben werden und dann jeweils die Zugabe der Alkylenoxidverbindung unterbrochen werden. Im diesem Fall umfasst der Verfahrensschritt der Aktivierung die Zeitspanne von der Zugabe der ersten Teilmenge an Alkylenoxidverbindung, gegebenenfalls in Gegenwart von CO₂, zum DMC-Katalysator bis zum Auftreten der Wärmeentwicklung nach Zugabe der letzten Teilmenge an Alkylenoxidverbindung. Im Allgemeinen kann dem Aktivierungsschritt ein Schritt zum Trocknen des DMC-Katalysators und ggf. der polymeren Formaldehydverbindung bei erhöhter Temperatur und/oder reduziertem Druck, gegebenenfalls unter Durchleiten eines Inertgases durch die Reaktionsmischung, vorgelagert sein.

Die Dosierung eines oder mehrerer Alkylenoxide (und gegebenenfalls des Kohlendioxids) kann prinzipiell in unterschiedlicher Weise erfolgen. Der Start der Dosierung kann aus dem Vakuum heraus oder bei einem zuvor gewählten Vordruck erfolgen. Der Vordruck wird bevorzugt durch Einleiten eines Inertgases (wie beispielsweise Stickstoff oder Argon) oder von Kohlendioxid eingestellt, wobei der Druck(absolut) 5 mbar bis 100 bar, vorzugsweise 10 mbar bis 50 bar und bevorzugt 20 mbar bis 50 bar beträgt.

In einer bevorzugten Ausführungsform beträgt die bei der Aktivierung in Schritt (β) eingesetzte Menge von einem oder mehreren Alkylenoxiden 0,1 bis 25,0 Gew.-%, bevorzugt 1,0 bis 20,0 Gew.-%, besonders bevorzugt 2,0 bis 16,0 Gew.-% (bezogen auf die im Schritt (α) eingesetzte Menge an Suspensionsmittel). Das Alkylenoxid kann in einem Schritt oder portionsweise in mehreren Teilmengen zugegeben werden. Bevorzugt wird nach Zugabe einer Teilmenge Alkylenoxidverbindung die Zugabe der Alkylenoxidverbindung bis zum Auftreten der Wärmeentwicklung unterbrochen und erst dann die nächste Teilmenge an Alkylenoxidverbindung zugegeben.

Im erfindungsgemäßen Verfahren wird die polymere Formaldehydverbindung in Schritt (γ) stufenweise oder kontinuierlich in den Reaktor zudosiert.
In einer bevorzugten Ausführungsform des erfindungsgemäßen Verfahrens wird die polymere Formaldehydverbindung und das Alkylenoxid in Schritt (γ) kontinuierlich dosiert.
Die Dosierung einer oder mehrerer polymeren Formaldehydverbindung(en), eines oder mehrerer Alkylenoxid(e) und gegebenenfalls auch des Kohlendioxids kann simultan oder sequentiell (portionsweise) erfolgen, beispielsweise kann die gesamte Kohlendioxidmenge, die Menge an polymerer Formaldehydverbindung und/oder die in Schritt (γ) dosierte Menge an Alkylenoxiden auf einmal oder kontinuierlich zugegeben werden. Der hier verwendete Begriff "kontinuierlich" kann als Modus der Zugabe eines Reaktanden so definiert werden, dass eine für die Copolymerisation wirksame Konzentration des Reaktanden aufrechterhalten wird, d.h. beispielsweise kann die Dosierung mit einer konstanten Dosierrate, mit einer variierenden Dosierrate oder portionsweise erfolgen.

Es ist möglich, während der Zugabe des Alkylenoxids und/oder der polymeren Formaldehydverbindung den CO₂-Druck allmählich oder schrittweise zu steigern oder zu senken oder gleich zu lassen. Vorzugsweise wird der Gesamtdruck während der Reaktion durch eine Nachdosierung an Kohlendioxid konstant gehalten. Die Dosierung eines oder mehrerer Alkylenoxid(e) und/oder der einen oder mehreren polymere(n) Formaldehydverbindung(en) erfolgt simultan oder sequentiell zur Kohlendioxid-Dosierung. Es ist möglich, das Alkylenoxid mit konstanter Dosierrate zu dosieren oder die Dosierrate allmählich oder schrittweise zu steigern oder zu senken oder das Alkylenoxid portionsweise zuzugeben. Bevorzugt wird das Alkylenoxid mit konstanter Dosierrate dem Reaktionsgemisch zugegeben. Werden mehrere Alkylenoxide zur Synthese der Polyoxymethylen-Polyoxyalkylen-Copolymere eingesetzt, so können die Alkylenoxide einzeln oder als Gemisch dosiert werden. Die Dosierung der Alkylenoxide bzw. der polymeren Formaldehydverbindung kann simultan oder sequentiell über jeweils separate Dosierungen (Zugaben) erfolgen oder über eine oder mehrere Dosierungen, wobei die Alkylenoxide bzw. die polymeren Formaldehydverbindungen einzeln oder als Gemisch dosiert werden können. Über die Art und/oder Reihenfolge der Dosierung der polymeren Formaldehydverbindungen, der Alkylenoxide und/oder des Kohlendioxids ist es möglich, statistische, alternierende, blockartige oder gradientenartige Polyoxymethylen-Polyoxyalkylen-Copolymers zu synthetisieren.

In einer bevorzugten Ausführungsform wird in Schritt (γ) die Dosierung der einen oder mehreren polymeren Formaldehydverbindung(en) zeitlich vor der Zugabe des Alkylenoxids beendet.

In einer weiteren Ausführungsform des erfindungsgemäßen Verfahrens wird ein Überschuss an Kohlendioxid bezogen auf die berechnete Menge an eingebautem Kohlendioxid im Polyethercarbonatpolyol eingesetzt, da bedingt durch die Reaktionsträgheit von Kohlendioxid ein Überschuss von Kohlendioxid von Vorteil ist. Die Menge an Kohlendioxid kann über den Gesamtdruck bei den jeweiligen Reaktionsbedingungen festgelegt werden. Als Gesamtdruck (absolut) hat sich der Bereich von 0,01 bis 120 bar, bevorzugt 0,1 bis 110 bar, besonders bevorzugt von 1 bis 100 bar für die Copolymerisation zur Herstellung der Polyethercarbonatpolyole als vorteilhaft erwiesen. Es ist möglich, das Kohlendioxid kontinuierlich oder diskontinuierlich zuzuführen. Dies hängt davon ab, wie schnell die Alkylenoxide verbraucht werden und ob das Produkt gegebenenfalls CO₂-freie Polyether-Blöcke enthalten soll. Die Menge des Kohlendioxids (angegeben als Druck) kann bei der Zugabe der Alkylenoxide ebenso variieren. CO₂ kann auch als Feststoff in den Reaktor gegeben werden und dann unter den gewählten Reaktionsbedingungen in den gasförmigen, gelösten, flüssigen und/oder überkritischen Zustand übergehen.

Eine bevorzugte Ausführungsform des erfindungsgemäßen Verfahrens ist unter anderem dadurch gekennzeichnet, dass in Schritt (γ) die Gesamtmenge der einen oder mehreren polymeren Formaldehydverbindung(en) zugegeben wird. Diese Zugabe kann mit einer konstanten Dosierrate, mit einer variierenden Dosierrate oder portionsweise erfolgen.

Für das erfindungsgemäße Verfahren hat sich weiterhin gezeigt, dass die Copolymerisation in Gegenwart von Kohlenstoffdioxid (Schritt (γ)) zur Herstellung der Polyoxymethylen-Polyethercarbonatpolyol-Copolymeren oder die Polymerisation in Gegenwart eines Inertgases wie beispielsweise Stickstoff unter Bildung von Polyoxymethylen-Polyetherpolyol-Copolymeren vorteilhafterweise bei Temperaturen von 50 bis 120 °C bevorzugt von 60 bis 110 °C und besonders bevorzugt von 70 bis 100 °C durchgeführt wird. Werden Temperaturen unterhalb von 50°C eingestellt, wird die Reaktion im Allgemeinen sehr langsam. Bei Temperaturen oberhalb von 120°C steigt die Menge an unerwünschten Nebenprodukten stark an und es erfolgt eine Zersetzung der polymeren Formaldehydverbindung.

Die Dosierung des Alkylenoxids, der polymeren Formaldehydverbindung und des DMC-Katalysators kann über separate oder gemeinsame Dosierstellen erfolgen. In einer bevorzugten Ausführungsform werden das Alkylenoxid und die polymere Formaldehydverbindung über separate Dosierstellen kontinuierlich dem Reaktionsgemisch zugeführt. Diese Zugabe der einen oder mehreren polymeren Formaldehydverbindung(en) kann als kontinuierliche Zudosierung in den Reaktor oder portionsweise erfolgen.

Die Schritte (α), (β) und (γ) können in demselben Reaktor oder jeweils separat in unterschiedlichen Reaktoren durchgeführt werden. Besonders bevorzugte Reaktortypen sind: Rohrreaktoren, Rührkessel, Schlaufenreaktoren.

Polyoxymethylen-Polyoxyalkylen-Copolymere können in einem Rührkessel hergestellt werden, wobei der Rührkessel je nach Ausführungsform und Betriebsweise über den Reaktormantel, innen liegende und/oder in einem Umpumpkreislauf befindliche Kühlflächen gekühlt wird. Sowohl in der semi-batch Anwendung, bei der das Produkt erst nach Ende der Reaktion entnommen wird, als auch in der kontinuierlichen Anwendung, bei der das Produkt kontinuierlich entnommen wird, ist besonders auf die Dosiergeschwindigkeit des Alkylenoxids zu achten. Sie ist so einzustellen, dass trotz der inhibierenden Wirkung des Kohlendioxids und/oder der polymeren Formaldehydverbindung die Alkylenoxide genügend schnell abreagieren. Die Konzentration an freien Alkylenoxiden in der Reaktionsmischung während des Aktivierungsschritts (Schritt β) beträgt vorzugsweise > 0 bis 100 Gew.-%, besonders bevorzugt > 0 bis 50 Gew-%, höchst bevorzugt > 0 bis 20 Gew.-% (jeweils bezogen auf das Gewicht der Reaktionsmischung). Die Konzentration an freien Alkylenoxiden in der Reaktionsmischung während der Reaktion (Schritt y) beträgt vorzugsweise > 0 bis 40 Gew.-%, besonders bevorzugt > 0 bis 25 Gew.-%, höchst bevorzugt > 0 bis 20 Gew.-%, jeweils bezogen auf das Gewicht der Reaktionsmischung.

In einer bevorzugten Ausführungsform wird die gemäß den Schritten (α) und (β) resultierende aktivierte DMC-Katalysator-Suspensionsmittel-Mischung in demselben Reaktor weiter mit einem oder mehreren Alkylenoxid(en), einer oder mehreren polymeren Formaldehydverbindung (en) und optional Kohlendioxid umgesetzt. In einer weiteren bevorzugten Ausführungsform wird die gemäß den Schritten (α) und (β) resultierende aktivierte DMC-Katalysator-Suspensionsmittel-Mischung in einem anderen Reaktionsbehältnis (beispielsweise einem Rührkessel, Rohrreaktor oder Schlaufenreaktor) weiter mit Alkylenoxiden, einer oder mehreren polymeren Formaldehydverbindung (en) und optional Kohlendioxid umgesetzt.

Bei Reaktionsführung in einem Rohrreaktor werden die gemäß den Schritten (α) und (β) resultierende aktivierte Katalysator-Suspensionsmittel-Mischung, eine oder mehrere polymeren Formaldehydverbindung(en), ein oder mehrere Alkylenoxid(e) und optional Kohlendioxid kontinuierlich durch ein Rohr gepumpt. Die molaren Verhältnisse der Reaktionspartner variieren je nach gewünschtem Polymer. In einer bevorzugten Ausführungsform wird hierbei Kohlendioxid in seiner flüssigen oder überkritischen Form zudosiert, um eine optimale Mischbarkeit der Komponenten zu ermöglichen. Vorteilhafterweise werden Mischelemente zur besseren Durchmischung der Reaktionspartner eingebaut, wie sie zum Beispiel von der Firma Ehrfeld Mikrotechnik BTS GmbH vertrieben werden, oder Mischer-Wärmetauscherelemente, die gleichzeitig die Durchmischung und Wärmeabfuhr verbessern.

Schlaufenreaktoren können ebenfalls zur Herstellung von Polyoxymethylen-Polyoxyalkylen-Copolymeren verwendet werden. Hierunter fallen im Allgemeinen Reaktoren mit Stoffrückführung, wie beispielsweise ein Strahlschlaufenreaktor, der auch kontinuierlich betrieben werden kann, oder ein schlaufenförmig ausgelegter Rohrreaktor mit geeigneten Vorrichtungen für die Umwälzung der Reaktionsmischung oder eine Schlaufe von mehreren hintereinander geschalteten Rohrreaktoren. Der Einsatz eines Schlaufenreaktors ist insbesondere deshalb von Vorteil, weil hier eine Rückvermischung realisiert werden kann, so dass die Konzentration an freien Alkylenoxiden in der Reaktionsmischung im optimalen Bereich, vorzugsweise im Bereich > 0 bis 40 Gew.-%, besonders bevorzugt > 0 bis 25 Gew.-%, höchst bevorzugt > 0 bis 16 Gew.-% (jeweils bezogen auf das Gewicht der Reaktionsmischung) gehalten werden kann.

Bevorzugt werden die Polyoxymethylen-Polyoxyalkylen-Copolymere in einem kontinuierlichen Verfahren hergestellt, das sowohl eine kontinuierliche Copolymerisation als auch eine kontinuierliche Zugabe der einen oder mehreren polymeren Formaldehydverbindung(en) umfasst.

In einer weiteren Ausführungsform des erfindungsgemäßen Verfahrens wird in Schritt (γ) das resultierende Reaktionsgemisch kontinuierlich aus dem Reaktor entfernt.

Gegenstand der Erfindung ist daher auch ein Verfahren wobei in Schritt (γ) eine oder mehrere polymeren Formaldehydverbindung (en), ein oder mehrere Alkylenoxid(e) sowie DMC-Katalysator optional in Gegenwart von Kohlendioxid ("Copolymerisation") kontinuierlich in den Reaktor dosiert werden und wobei das resultierende Reaktionsgemisch (enthaltend das Reaktionsprodukt) kontinuierlich aus dem Reaktor entfernt wird.

Beispielsweise wird für das kontinuierliche Verfahren zur Herstellung der Polyoxymethylen-Polyoxyalkylen-Copolymere gemäß den Schritten (α) und (β) eine aktivierte DMC-Katalysator-Suspensionsmittel-Mischung hergestellt, dann werden gemäß Schritt (γ)
(γ1) jeweils eine Teilmenge an einer oder mehreren polymeren Formaldehydverbindung(en), einem oder mehreren Alkylenoxid(en) und optional Kohlendioxid zudosiert zum Initiieren der Copolymerisation, und
(γ2) während des Fortschreitens der Copolymerisation jeweils die verbleibende Menge an DMC-Katalysator, einer oder mehreren polymeren Formaldehydverbindung (en) und Alkylenoxid(en) optional in Gegenwart von Kohlendioxid kontinuierlich zudosiert, wobei gleichzeitig resultierendes Reaktionsgemisch kontinuierlich aus dem Reaktor entfernt wird.

In Schritt (γ) wird der DMC-Katalysator bevorzugt suspendiert im Suspensionsmittel mit H-funktionellen Gruppen oder Suspensionsmittel ohne H-funktionelle Gruppen, bevorzugt Suspensionsmittel ohne H-funktionelle Gruppen zugegeben, wobei die Menge vorzugsweise so gewählt ist, dass der Gehalt an DMC-Katalysator im resultierenden Reaktionsprodukt 10 bis 10000 ppm, besonders bevorzugt 20 bis 5000 ppm und höchst bevorzugt 50 bis 800 ppm beträgt.

Vorzugsweise werden die Schritte (α) und (β) in einem ersten Reaktor durchgeführt, und das resultierende Reaktionsgemisch dann in einen zweiten Reaktor für die Copolymersation gemäß Schritt (γ) überführt. Es ist aber auch möglich, die Schritte (α), (β) und (γ) in einem Reaktor durchzuführen.

Es ist auch gefunden worden, dass das Verfahren der vorliegenden Erfindung zur Herstellung großer Mengen des Polyoxymethylen-Polyoxyalkylen-Copolymerprodukts verwendet werden kann, wobei anfänglich ein gemäß den Schritten (α) und (β) in einem Suspensionsmittel aktivierter DMC-Katalysator verwendet wird, und während der Copolymerisation (γ) der DMC-Katalysator ohne vorherige Aktivierung zugesetzt wird.

Ein besonders vorteilhaftes Merkmal der bevorzugten Ausführungsform der vorliegenden Erfindung ist also die Fähigkeit zur Verwendung von "frischen" DMC-Katalysatoren ohne Aktivierung für die Teilmenge an DMC-Katalysator, der kontinuierlich im Schritt (γ) zugegeben wird. Eine analog zu Schritt (β) durchzuführende Aktivierung von DMC-Katalysatoren umfasst nicht nur zusätzliche Aufmerksamkeit der Bedienungsperson, wodurch sich die Fertigungskosten erhöhen, sondern sie erfordert auch einen Druck-Reaktionsbehälter, wodurch sich auch die Kapitalkosten beim Bau einer entsprechenden Produktionsanlage erhöhen. Hier wird "frischer" Katalysator als nicht aktivierter DMC-Katalysator in fester Form oder in Form einer Aufschlämmung in einer polymeren Formaldehydverbindung oder Suspensionsmittel definiert. Die Fähigkeit des vorliegenden Verfahrens zur Verwendung von frischem, nicht aktiviertem DMC-Katalysator im Schritt (γ) ermöglicht signifikante Einsparungen bei der kommerziellen Herstellung von Polyethercarbonatpolyolen und ist eine bevorzugte Ausführungsform der vorliegenden Erfindung.

Der hier verwendete Begriff "kontinuierlich" kann als Modus der Zugabe eines relevanten Katalysators oder Reaktanden so definiert werden, dass eine im Wesentlichen kontinuierliche wirksame Konzentration des DMC-Katalysators oder des Reaktanden aufrechterhalten wird. Die Katalysatorzufuhr kann echt kontinuierlich oder in relativ eng beabstandeten Inkrementen erfolgen. Gleichermaßen kann eine kontinuierliche Zugabe der polymeren Formaldehydverbindung echt kontinuierlich sein oder in Inkrementen erfolgen. Es würde nicht vom vorliegenden Verfahren abweichen, einen DMC-Katalysator oder Reaktanden inkrementell so zuzugeben, dass die Konzentration der zugegebenen Materialien für einige Zeit vor der nächsten inkrementellen Zugabe im Wesentlichen auf null abfällt. Es ist jedoch bevorzugt, dass die DMC-Katalysatorkonzentration während des Hauptteils des Verlaufs der kontinuierlichen Reaktion im Wesentlichen auf derselben Konzentration gehalten wird und dass Startersubstanz während des Hauptteils des Copolymerisations-Verfahrens vorhanden ist. Eine inkrementelle Zugabe von DMC-Katalysator und/oder Reaktand, die die Beschaffenheit des Produkts nicht wesentlich beeinflusst, ist in demjenigen Sinn, in dem der Begriff hier verwendet wird, dennoch "kontinuierlich". Es ist beispielsweise machbar, eine Rückführungsschleife bereitzustellen, in der ein Teil der reagierenden Mischung zu einem vorherigen Punkt im Verfahren zurückgeführt wird, wodurch durch inkrementelle Zugaben bewirkte Diskontinuitäten geglättet werden.

Optional kann in einem Schritt (δ) das in Schritt (γ) kontinuierlich entfernte Reaktionsgemisch, welches im allgemeinen einen Gehalt von 0,05 Gew.-% bis 10 Gew.-% Alkylenoxid enthält, in einen Nachreaktor überführt werden, in dem im Wege einer Nachreaktion der Gehalt an freiem Alkylenoxid auf weniger als 0,05 Gew.-% im Reaktionsgemisch reduziert wird. Als Nachreaktor kann beispielsweise ein Rohrreaktor, ein Schlaufenreaktor oder ein Rührkessel verwendet werden.

Bevorzugt liegt der Druck in diesem Nachreaktor bei demselben Druck wie in dem Reaktionsapparat, in dem der Reaktionsschritt (γ) durchgeführt wird. Der Druck in dem nachgeschalteten Reaktor kann jedoch auch höher oder niedriger gewählt werden. In einer weiteren bevorzugten Ausführungsform wird das Kohlendioxid nach dem Reaktionsschritt (γ) ganz oder teilweise abgelassen und der nachgeschaltete Reaktor bei Normaldruck oder einem geringen Überdruck betrieben. Die Temperatur in dem nachgeschalteten Reaktor liegt bevorzugt bei 50 bis 150°C und besonders bevorzugt bei 80 bis 140°C.

Als polymere Formaldehydverbindung für das erfindungsgemäße Verfahren eignen sich grundsätzlich solche oligomeren und polymeren Formen des Formaldehyds, welche wenigstens eine terminale Hydroxylgruppe zur Reaktion mit den Alkylenoxiden und den gegebenenfalls weiteren Comonomeren aufweisen. Unter dem Begriff "terminale Hydroxylgruppe" wird erfindungsgemäß insbesondere eine terminale Halbacetal-Funktionalität verstanden, welche sich als Strukturmerkmal über die Polymerisation des Formaldehyds ergibt. Beispielsweise können die Starterverbindungen Oligomere und Polymere des Formaldehyds der allgemeinen Formel HO-(CH₂O)ₙ-H sein, wobei n für eine ganze Zahl ≥ 2 steht und wobei polymeres Formaldehyd typischerweise n > 8 Wiederholungseinheiten aufweist.

Für das erfindungsgemäße Verfahren geeignete polymere Formaldehydverbindungen weisen im Allgemeinen Molmassen von 62 bis 30000 g/mol, bevorzugt von 62 bis 12000 g/mol, besonders bevorzugt von 242 bis 6000 g/mol und ganz besonders bevorzugt von 242 bis 3000 g/mol auf und umfassen von 2 bis 1000, bevorzugt von 2 bis 400, besonders bevorzugt von 8 bis 200 und ganz besonders bevorzugt von 8 bis 100 Oxymethylen-Wiederholungseinheiten n. Die im erfindungsgemäßen Verfahren eingesetzten Verbindungen haben typischerweise eine Funktionalität (F) von 1 bis 3, in bestimmten Fällen können diese aber auch höherfunktionell sein, also eine Funktionalität > 3 besitzen. Bevorzugt werden im erfindungsgemäßen Verfahren offenkettige polymere Formaldehydverbindungen mit terminalen Hydroxylgruppen eingesetzt, welche eine Funktionalität von 1 bis 10, bevorzugt von 1 bis 5, besonders bevorzugt von 2 bis 3 haben. Ganz besonders bevorzugt werden im erfindungsgemäßen Verfahren lineare polymere Formaldehydverbindungen eingesetzt, welche eine Funktionalität von 2 aufweisen. Die Funktionalität F entspricht der Anzahl an OH-Endgruppen pro Molekül.

Die Herstellung der polymeren Formaldehydverbindungen, welche für das erfindungsgemäße Verfahren eingesetzt werden, kann nach bekannten Verfahren erfolgen (vgl. z.B. M. Haubs et. al., 2012, Polyoxymethylenes, Ullmann's Encyclopedia of Industrial Chemistry; G. Reus et. al., 2012, Formaldehyde, ibid). Die Formaldehydverbindungen können im erfindungsgemäßen Verfahren grundsätzlich auch in Form eines Copolymers eingesetzt werden, wobei als Comonomere neben Formaldehyd beispielsweise 1,4-Dioxan, oder 1,3-Dioxolan einpolymerisiert sind. Weitere geeignete Formaldehyd-Copolymere für das erfindungsgemäße Verfahren sind Copolymere des Formaldehyds sowie des Trioxans mit cyclischen und/oder linearen Formalen, wie beispielsweise Butandiolformal, oder Epoxiden. Es ist ebenfalls denkbar, dass als Comonomere höhere homologe Aldehyde, wie beispielweise Acetaldehyd, Propionaldehyd, etc., in das Formaldehyd-Polymer eingebaut sind. Ebenfalls ist es denkbar, dass erfindungsgemäße Formaldehydverbindungen wiederum ausgehend von H-funktionellen Starterverbindungen hergestellt werden, insbesondere lassen sich hierbei durch den Einsatz von mehrwertigen Verbindungen polymere Formaldehydverbindungen mit einer Hydroxy-Endgruppen-Funktionalität F > 2 erhalten (vgl. z.B. WO 1981001712 A1, Bull. Chem. Soc. J., 1994, 67, 2560-2566, US 3436375, JP 03263454, JP 2928823).

Bekanntlich polymerisiert Formaldehyd bereits durch die Gegenwart geringer Wasserspuren. In wässriger Lösung bildet sich daher in Abhängigkeit von Konzentration und Temperatur der Lösung ein Gemisch von Oligomeren und Polymeren unterschiedlicher Kettenlängen, welche mit molekularem Formaldehyd und Formaldehyd-Hydrat im Gleichgewicht stehen. Sogenanntes Paraformaldehyd fällt hierbei als ein weißer, schlecht-löslicher Feststoff, aus der Lösung aus und stellt in der Regel ein Gemisch linearer Formaldehyd-Polymere mit n = 8 bis 100 Oxymethylen-Wiederholungseinheiten dar.

Ein Vorteil des erfindungsgemäßen Verfahrens liegt insbesondere darin, dass polymeres Formaldehyd bzw. sogenanntes Paraformaldehyd, welches kommerziell und kostengünstig erhältlich ist, direkt als Reaktand eingesetzt werden kann, ohne dass hierbei zusätzliche vorbereitende Schritte nötig sind. In einer vorteilhaften Ausführungsform der Erfindung wird daher Paraformaldehyd als Reaktand eingesetzt. Insbesondere lassen sich über das Molekulargewicht und die Endgruppenfunktionalität der polymeren Formaldehydverbindung Polyoxymethylen-Blöcke mit definiertem Molgewicht und Funktionalität in das Produkt einbringen.

Vorteilhafterweise kann hierbei im erfindungsgemäßen Verfahren die Länge des Polyoxymethylen-Blocks einfach über das Molekulargewicht der eingesetzten Formaldehydverbindung gesteuert werden. Vorzugsweise werden hierbei lineare Formaldehydverbindungen der allgemeinen Formel HO-(CH₂O)ₙ-H, wobei n für eine ganze Zahl ≥ 2 steht, bevorzugt mit n = 2 bis 1000, besonders bevorzugt mit n = 2 bis 400 und ganz besonders bevorzugt mit n = 8 bis 100, mit zwei terminalen Hydroxylgruppen eingesetzt. Insbesondere können als Starterverbindung auch Gemische von polymeren Formaldehyd-Verbindungen der Formel HO-(CH₂O)ₙ-H mit jeweils unterschiedlichen Werten für n eingesetzt werden. In einer vorteilhaften Ausführungsform enthalten die eingesetzten Gemische von polymeren Formaldehydverbindungen der Formel HO-(CH₂O)ₙ-H wenigstens 1 Gew-%, bevorzugt wenigstens 5 Gew.-% und besonders bevorzugt wenigstens 10 Gew.-% an polymeren Formaldehyd-Verbindungen mit n ≥ 20.

In einer bevorzugten Ausführungsform des erfindungsgemäßen Verfahrens weist die polymere Formaldehydverbindung 2 Hydroxylgruppen und 8 bis 100 Oxymethylen-Wiederholungseinheiten (n) oder 3 Hydroxylgruppen und 8 bis 100 Oxymethylen-Wiederholungseinheiten (n) auf.

Als Epoxid (Alkylenoxid) werden für die Herstellung der Polyoxymethylen-Blockcopolymere Verbindungen der allgemeinen Formel (I): 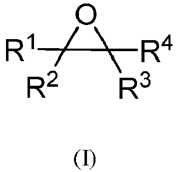 eingesetzt, wobei R¹, R², R³ und R⁴ unabhängig voneinander für Wasserstoff oder einen gegebenenfalls zusätzliche Heteroatome wie Stickstoff, Sauerstoff, Silizium, Schwefel oder Phosphor enthaltenden Alkyl- oder Arylrest stehen und ggf. so miteinander verknüpft sein können, dass sie zyklische Strukturen ausbilden, wie beispielsweise ein Cycloalkylenoxid.

Im Rahmen des erfindungsgemäßen Verfahrens können grundsätzlich solche Alkylenoxide eingesetzt werden, welche sich für die Polymerisation in Gegenwart eines DMC-Katalysators eignen. Werden verschiedene Alkylenoxide verwendet, so können diese entweder als Mischung oder nacheinander zudosiert werden. Bei letzterer Dosierweise können die Polyetherketten des hierüber erhaltenen Polyoxymethylen-Polyoxyalkylen-Copolymers ihrerseits ebenfalls eine Blockstruktur aufweisen.

Allgemein können für das erfindungsgemäße Verfahren Alkylenoxide (Epoxide) mit 2-24 Kohlenstoffatomen eingesetzt werden. Bei den Alkylenoxiden mit 2-24 Kohlenstoffatomen handelt es sich beispielsweise um eine oder mehrere Verbindungen ausgewählt aus der Gruppe bestehend aus Ethylenoxid, Propylenoxid, 1-Butenoxid, 2,3-Butenoxid, 2-Methyl-1,2-propenoxid (Isobutenoxid), 1-Pentenoxid, 2,3-Pentenoxid, 2-Methyl-1,2-butenoxid, 3-Methyl-1,2-butenoxid, 1-Hexenoxid, 2,3-Hexenoxid, 3,4-Hexenoxid, 2-Methyl-1,2-pentenoxid, 4-Methyl-1,2-pentenoxid, 2-Ethyl-1,2-butenoxid, 1-Heptenoxid, 1-Octenoxid, 1-Nonenoxid, 1-Decenoxid, 1-Undecenoxid, 1-Dodecenoxid, 4-Methyl-1,2-pentenoxid, Butadienmonoxid, Isoprenmonoxid, Cyclopentenoxid, Cyclohexenoxid, Cycloheptenoxid, Cyclooctenoxid, Styroloxid, Methylstyroloxid, Pinenoxid, ein- oder mehrfach epoxidierte Fette als Mono-, Di- und Triglyceride, epoxidierte Fettsäuren, C1-C24-Ester von epoxidierten Fettsäuren, Epichlorhydrin, Glycidol, und Derivate des Glycidols wie beispielsweise Methylglycidylether, Ethylglycidylether, 2-Ethylhexylglycidylether, Allylglycidylether, Glycidylmethacrylat sowie epoxidfunktionelle Alkyoxysilane wie beispielsweise 3-Glycidyloxypropyltrimethoxysilan, 3-Glycidyioxypropyltriethoxysilan, 3-Glycidyloxypropyltripropoxysilan, 3-Glycidyloxypropyl-methyl-dimethoxysilan, 3-Glycidyloxypropyl-ethyldiethoxysilan, 3-Glycidyloxypropyltrlisopropoxysilan. Vorzugsweise ist das Epoxid der allgemeinen Formel (I) ein terminales Epoxid, wobei R1, R2 und R3 für Wasserstoff stehen, und R4 Wasserstoff, ein gegebenenfalls zusätzliche Heteroatome wie Stickstoff, Sauerstoff, Silizium, Schwefel oder Phosphor enthaltender Alkyl- oder Arylrest sein kann und sich in verschiedenen Wiederholungseinheiten unterscheiden kann.

In einer bevorzugten Ausführungsform des erfindungsgemäßen Verfahrens ist das Alkylenoxid eine oder mehrere Verbindung(en) und ausgewählt wird aus der Gruppe bestehend aus Ethylenoxid, Propylenoxid, Styroloxid und Cyclohexenoxid bevorzugt Ethylenoxid und Propylenoxid und besonders bevorzugt Propylenoxid.

Die in dem erfindungsgemäßen Verfahren vorzugsweise einsetzbaren DMC-Katalysatoren enthaltenen Doppelmetallcyanid-Verbindungen sind die Reaktionsprodukte wasserlöslicher Metallsalze und wasserlöslicher Metallcyanidsalze.

Doppelmetallcyanid (DMC)-Katalysatoren zur Verwendung in der Homopolymerisation von Alkylenoxiden sind im Prinzip aus dem Stand der Technik bekannt (siehe z.B. US-A 3 404 109, US-A 3 829 505, US-A 3 941 849 und US-A 5 158 922). DMC-Katalysatoren, die z.B. in US-A 5 470 813, EP-A 700 949, EP-A 743 093, EP-A 761 708, WO 97/40086, WO 98/16310 und WO 00/47649 beschrieben sind, besitzen eine sehr hohe Aktivität und ermöglichen die Herstellung von Polyethercarbonaten bei sehr geringen Katalysatorkonzentrationen. Ein typisches Beispiel sind die in EP-A 700 949 beschriebenen hochaktiven DMC-Katalysatoren, die neben einer Doppelmetallcyanid-Verbindung (z.B. Zinkhexacyanocobaltat(III)) und einem organischen Komplexliganden (z.B. *tert*-Butanol) noch einen Polyether mit einem zahlenmittlerem Molekulargewicht größer als 500 g/mol enthalten.

Die erfindungsgemäß einsetzbaren DMC-Katalysatoren werden vorzugsweise erhalten, indem man
(1.) im ersten Schritt eine wässrige Lösung eines Metallsalzes mit der wässrigen Lösung eines Metallcyanidsalzes in Gegenwart eines oder mehrerer organischen Komplexliganden, z.B. eines Ethers oder Alkohols, umsetzt,
(2.) wobei im zweiten Schritt der Feststoff aus der aus (a) erhaltenen Suspension durch bekannte Techniken (wie Zentrifugation oder Filtration) abgetrennt wird,
(3.) wobei gegebenenfalls in einem dritten Schritt der isolierte Feststoff mit einer wässrigen Lösung eines organischen Komplexliganden gewaschen wird (z.B. durch Resuspendieren und anschließende erneute Isolierung durch Filtration oder Zentrifugation),
(4.) wobei anschließend der erhaltene Feststoff, gegebenenfalls nach Pulverisierung, bei Temperaturen von im allgemeinen 20 - 120°C und bei Drücken von im Allgemeinen 0,1 mbar bis Normaldruck (1013 mbar) getrocknet wird,
und wobei im ersten Schritt oder unmittelbar nach der Ausfällung der Doppelmetallcyanidverbindung (zweiter Schritt) ein oder mehrere organische Komplexliganden, vorzugsweise im Überschuss (bezogen auf die Doppelmetallcyanidverbindung) und gegebenenfalls weitere komplexbildende Komponenten zugesetzt werden.

Die in den erfindungsgemäß einsetzbaren DMC-Katalysatoren enthaltenen Doppelmetallcyanid-Verbindungen sind die Reaktionsprodukte wasserlöslicher Metallsalze und wasserlöslicher Metallcyanidsalze.

Beispielsweise wird eine wässrige Zinkchlorid-Lösung (bevorzugt im Überschuss bezogen auf das Metallcyanidsalz) und Kaliumhexacyanocobaltat gemischt und anschließend Dimethoxyethan (Glyme) oder *tert*-Butanol (vorzugsweise im Überschuss, bezogen auf Zinkhexacyanocobaltat) zur gebildeten Suspension gegeben.

Zur Herstellung der Doppelmetallcyanid-Verbindungen geeignete Metallsalze weisen bevorzugt eine Zusammensetzung nach der allgemeinen Formel (II) auf,

M(X)ₙ (II),

wobei
M ausgewählt ist aus den Metallkationen Zn²⁺, Fe²⁺, Ni²⁺, Mn²⁺, Co²⁺, Sr²⁺, Sn²⁺, Pb²⁺ und, Cu²⁺, bevorzugt ist M Zn²⁺, Fe²⁺, Co²⁺ oder Ni²⁺,
X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
n ist 1, wenn X = Sulfat, Carbonat oder Oxalat und
n ist 2, wenn X = Halogenid, Hydroxid, Carboxylat, Cyanat, Thiocyanat, Isocyanat, Isothiocyanat oder Nitrat,
oder geeignete Metallsalze weisen bevorzugt eine Zusammensetzung nach der allgemeinen Formel (III) auf,

Mᵣ(X)₃ (III),

wobei
M ausgewählt ist aus den Metallkationen Fe³⁺, Al³⁺, Co³⁺ und Cr³⁺,
X umfasst ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanate Isocyanat, Isothiocyanat, Carboxylat, Oxalat und Nitrat;
r ist 2, wenn X = Sulfat, Carbonat oder Oxalat und
r ist 1, wenn X = Halogenid, Hydroxid, Carboxylat, Cyanat, Thiocyanat, Isocyanat, Isothiocyanat oder Nitrat,
oder geeignete Metallsalze weisen bevorzugt eine Zusammensetzung nach der allgemeinen Formel (IV) auf,

M(X)ₛ (IV),

wobei
M ausgewählt ist aus den Metallkationen Mo⁴⁺, V⁴⁺ und W⁴⁺,
X umfasst ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
   s ist 2, wenn X = Sulfat, Carbonat oder Oxalat und
   s ist 4, wenn X = Halogenid, Hydroxid, Carboxylat, Cyanat, Thiocyanat, Isocyanat, Isothiocyanat oder Nitrat,
   oder geeignete Metallsalze weisen bevorzugt eine Zusammensetzung nach der allgemeinen Formel (V) auf,

M(X)t (V),

wobei
M ausgewählt ist aus den Metallkationen Mo⁶⁺ und W⁶⁺,
X umfasst ein oder mehrere (d.h. verschiedene) Anionen, vorzugsweise Anionen ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
t ist 3, wenn X = Sulfat, Carbonat oder Oxalat und
t ist 6, wenn X = Halogenid, Hydroxid, Carboxylat, Cyanat, Thiocyanat, Isocyanat, Isothiocyanat oder Nitrat.

Beispiele geeigneter Metallsalze sind Zinkchlorid, Zinkbromid, Zinkjodid, Zinkacetat, Zinkacetylacetonat, Zinkbenzoat, Zinknitrat, Eisen(II)sulfat, Eisen(II)bromid, Eisen(II)chlorid, Eisen(III)chlorid, Cobalt(II)chlorid, Cobalt(II)thiocyanat, Nickel(II)chlorid und Nickel(II)nitrat. Es können auch Mischungen verschiedener Metallsalze eingesetzt werden.

Zur Herstellung der Doppelmetallcyanid-Verbindungen geeignete Metallcyanidsalze weisen bevorzugt eine Zusammensetzung nach der allgemeinen Formel (VI) auf

(Y)ₐ M'(CN)_{b} (A)_{c} (VI),

wobei
M' ausgewählt ist aus einem oder mehreren Metallkationen der Gruppe bestehend aus Fe(II), Fe(III), Co(II), Co(III), Cr(II), Cr(III), Mn(II), Mn(III), Ir(III), Ni(II), Rh(III), Ru(II), V(IV) und V(V), bevorzugt ist M' ein oder mehrere Metallkationen der Gruppe bestehend aus Co(II), Co(III), Fe(II), Fe(III), Cr(III), Ir(III) und Ni(II), Y ausgewählt ist aus einem oder mehreren Metallkationen der Gruppe bestehend aus Alkalimetall (d.h. Li⁺, Na⁺, K⁺, Rb⁺) und Erdalkalimetall (d.h. Be²⁺, Mg²⁺, Ca²⁺, Sr²⁺, Ba²⁺), A ausgewählt ist aus einem oder mehreren Anionen der Gruppe bestehend aus Halogenide (d.h. Fluorid, Chlorid, Bromid, Iodid), Hydroxid, Sulfat, Carbonat, Cyanat, Thiocyanat, Isocyanat, Isothiocyanat, Carboxylat, Azid, Oxalat oder Nitrat und a, b und c sind ganzzahlige Zahlen, wobei die Werte für a, b und c so gewählt sind, dass die Elektroneutralität des Metallcyanidsalzes gegeben ist; a ist vorzugsweise 1, 2, 3 oder 4; b ist vorzugsweise 4, 5 oder 6; c besitzt bevorzugt den Wert 0.

Beispiele geeigneter Metallcyanidsalze sind Natriumhexacyanocobaltat(III), Kaliumhexacyanocobaltat(III), Kaliumhexacyanoferrat(II), Kaliumhexacyanoferrat(III), Calciumhexacyanocobaltat(III) und Lithiumhexacyanocobaltat(III).

Bevorzugte Doppelmetallcyanid-Verbindungen, die in den erfindungsgemäß einsetzbaren DMC-Katalysatoren enthalten sind, sind Verbindungen mit Zusammensetzungen nach der allgemeinen Formel (VII)

Mₓ[M'ₓ,(CN)_{y}]_{z} (VII),

worin M wie in den Formeln (I) bis (IV) und
M' wie in Formel (V) definiert ist, und
x, x', y und z ganzzahlig sind und so gewählt, dass die Elektronenneutralität der Doppelmetallcyanidverbindung gegeben ist.

Vorzugsweise ist
x = 3, x' = 1, y = 6 und z = 2,
M = Zn(II), Fe(II), Co(II) oder Ni(II) und
M' = Co(III), Fe(III), Cr(III) oder Ir(III).

Beispiele geeigneter Doppelmetallcyanidverbindungen a) sind Zinkhexacyanocobaltat(III), Zinkhexacyanoiridat(III), Zinkhexacyanoferrat(III) und Kobalt(II)hexacyanokobaltat(III). Weitere Beispiele geeigneter Doppelmetallcyanid-Verbindungen sind z.B. US 5 158 922 (Spalte 8, Zeilen 29 - 66) zu entnehmen. Besonders bevorzugt kann Zinkhexacyanokobaltat(III) verwendet werden.

Die bei der Herstellung der DMC-Katalysatoren zusetzbaren organischen Komplexliganden sind beispielsweise in US-A 5 158 922 (siehe insbesondere Spalte 6, Zeilen 9 bis 65), US 3 404 109, US 3 829 505, US 3 941 849, EP-A 700 949, EP-A 761 708, JP 4 145 123, US 5 470 813, EP-A 743 093 und WO-A 97/40086) offenbart. Beispielsweise werden als organische Komplexliganden wasserlösliche, organische Verbindungen mit Heteroatomen, wie Sauerstoff, Stickstoff, Phosphor oder Schwefel, die mit der Doppelmetallcyanid-Verbindung Komplexe bilden können, eingesetzt. Bevorzugte organische Komplexliganden sind Alkohole, Aldehyde, Ketone, Ether, Ester, Amide, Harnstoffe, Nitrile, Sulfide und deren Mischungen. Besonders bevorzugte organische Komplexliganden sind aliphatische Ether (wie Dimethoxyethan), wasserlösliche aliphatische Alkohole (wie Ethanol, Isopropanol, n-Butanol, iso-Butanol, sek.-Butanol, tert-Butanol, 2-Methyl-3-buten-2-ol und 2-Methyl-3-butin-2-ol), Verbindungen, die sowohl aliphatische oder cycloaliphatische Ethergruppen wie auch aliphatische Hydroxylgruppen enthalten (wie z.B. Ethylenglykol-mono-tert-butylether, Diethylenglykol-mono-tert-butylether, Tripropylenglykolmono-methylether und 3-Methyl-3-oxetan-methanol). Höchst bevorzugte organische Komplexliganden sind ausgewählt aus einer oder mehrerer Verbindungen der Gruppe bestehend aus Dimethoxyethan, tert-Butanol 2-Methyl-3-buten-2-ol, 2-Methyl-3-butin-2-ol, Ethylenglykol-mono-tert-butylether und 3-Methyl-3-oxetan-methanol.

Optional werden in der Herstellung der erfindungsgemäß einsetzbaren DMC-Katalysatoren eine oder mehrere komplexbildende Komponente(n) aus den Verbindungsklassen der Polyether, Polyester, Polycarbonate, Polyalkylenglykolsorbitanester, Polyalkylenglykolglycidylether, Polyacrylamid, Poly(acrylamid-co-acrylsäure), Polyacrylsäure, Poly(acrylsäure-co-maleinsäure), Polyacrylnitril, Polyalkylacrylate, Polyalkylmethacrylate, Polyvinylmethylether, Polyvinylethylether, Polyvinylacetat, Polyvinylalkohol, Poly-N-vinylpyrrolidon, Poly(N-vinylpyrrolidon-co-acrylsäure), Polyvinylmethylketon, Poly(4-vinylphenol), Poly(acrylsäure-co-styrol), Oxazolinpolymere, Polyalkylenimine, Maleinsäure- und Maleinsäureanhydridcopolymere, Hydroxyethylcellulose und Polyacetale, oder der Glycidylether, Glycoside, Carbonsäureester mehrwertiger Alkohole, Gallensäuren oder deren Salze, Ester oder Amide, Cyclodextrine, Phosphorverbindungen, α,β-ungesättigten Carbonsäureester oder ionische Oberflächen- bzw. grenzflächenaktiven Verbindungen eingesetzt.

Bevorzugt werden bei der Herstellung der erfindungsgemäß einsetzbaren DMC-Katalysatoren die wässrigen Lösungen des Metallsalzes (z.B. Zinkchlorid) im ersten Schritt im stöchiometrischen Überschuss (mindestens 50 Mol-%) bezogen auf das Metallcyanidsalz eingesetzt. Dies entspricht mindestens einem molaren Verhältnis von Metallsalz zu Metallcyanidsalz von 2,25 zu 1,00. Das Metallcyanidsalz (z.B. Kaliumhexacyanokobaltat) wird in Gegenwart des organischen Komplexliganden (z.B. tert-Butanol) umgesetzt, wobei sich eine Suspension bildet, die die Doppelmetallcyanid-Verbindung (z.B. Zinkhexacyanocobaltat), Wasser, überschüssiges Metallsalz, und den organischen Komplexliganden enthält.

Der organische Komplexligand kann dabei in der wässrigen Lösung des Metallsalzes und/oder des Metallcyanidsalzes vorhanden sein, oder er wird der nach Ausfällung der Doppelmetallcyanid-Verbindung erhaltenen Suspension unmittelbar zugegeben. Es hat sich als vorteilhaft erwiesen, die wässrigen Lösungen des Metallsalzes und des Metallcyanidsalzes, und den organischen Komplexliganden unter starkem Rühren zu vermischen. Optional wird die im ersten Schritt gebildete Suspension anschließend mit einer weiteren komplexbildenden Komponente behandelt. Die komplexbildende Komponente wird dabei bevorzugt in einer Mischung mit Wasser und organischem Komplexliganden eingesetzt. Ein bevorzugtes Verfahren zur Durchführung des ersten Schrittes (d.h. der Herstellung der Suspension) erfolgt unter Einsatz einer Mischdüse, besonders bevorzugt unter Einsatz eines Strahldispergators, wie beispielsweise in WO-A 01/39883 beschrieben.

Im zweiten Schritt kann die Isolierung des Feststoffs (d.h. die Vorstufe des Katalysators) aus der Suspension durch bekannte Techniken, wie Zentrifugation oder Filtration, erfolgen.

In einer bevorzugten Ausführungsvariante wird der isolierte Feststoff anschließend in einem dritten Verfahrensschritt mit einer wässrigen Lösung des organischen Komplexliganden gewaschen (z.B. durch Resuspendieren und anschließende erneute Isolierung durch Filtration oder Zentrifugation). Auf diese Weise können zum Beispiel wasserlösliche Nebenprodukte, wie Kaliumchlorid, aus dem erfindungsgemäß einsetzbaren Katalysator entfernt werden. Bevorzugt liegt die Menge des organischen Komplexliganden in der wässrigen Waschlösung zwischen 40 und 80 Gew.%, bezogen auf die Gesamtlösung.

Optional wird im dritten Schritt der wässrigen Waschlösung eine weitere komplexbildende Komponente, bevorzugt im Bereich zwischen 0,5 und 5 Gew.%, bezogen auf die Gesamtlösung, zugefügt.

Außerdem ist es vorteilhaft, den isolierten Feststoff mehr als einmal zu waschen. Vorzugsweise wird in einem ersten Waschschritt (3.-1) mit einer wässrigen Lösung des ungesättigten Alkohols gewaschen (z.B. durch Resuspendieren und anschließende erneute Isolierung durch Filtration oder Zentrifugation), um auf diese Weise zum Beispiel wasserlösliche Nebenprodukte, wie Kaliumchlorid, aus dem erfindungsgemäß einsetzbaren Katalysator zu entfernen. Besonders bevorzugt liegt die Menge des ungesättigten Alkohols in der wässrigen Waschlösung zwischen 40 und 80 Gew.%, bezogen auf die Gesamtlösung des ersten Waschschritts. In den weiteren Waschschritten (3.-2) wird entweder der erste Waschschritt einmal oder mehrmals, vorzugsweise einmal bis dreimal wiederholt, oder vorzugsweise wird eine nicht-wässrige Lösung, wie z.B. eine Mischung oder Lösung aus ungesättigtem Alkohol und weiterer komplexbildender Komponente (bevorzugt im Bereich zwischen 0,5 und 5 Gew.%, bezogen auf die Gesamtmenge der Waschlösung des Schrittes (3.-2)), als Waschlösung eingesetzt und der Feststoff damit einmal oder mehrmals, vorzugsweise einmal bis dreimal gewaschen.

Der isolierte und gegebenenfalls gewaschene Feststoff kann anschließend, gegebenenfalls nach Pulverisierung, bei Temperaturen von 20 - 100°C und bei Drücken von 0,1 mbar bis Normaldruck (1013 mbar) getrocknet werden.

Ein bevorzugtes Verfahren zur Isolierung der erfindungsgemäß einsetzbaren DMC-Katalysatoren aus der Suspension durch Filtration, Filterkuchenwäsche und Trocknung wird in WO-A 01/80994 beschrieben.

Der Doppelmetallcyanid (DMC)-Katalysator wird vorzugsweise in einer berechneten Menge von 50 bis 800 ppm, bevorzugt von 100 bis 700 ppm besonders bevorzugt von 150 bis 700 bezogen auf die Summe der Massen der polymeren Formaldehydverbindung und des Alkylenoxids eingesetzt. Oberhalb von 800 ppm resultiert ein hoher Anteil des DMC-Katalysators, wobei die Schwermetalle vor einer weiteren Umsetzung zum Polyurethan abgetrennt werden müssen. Unterhalb von 50 ppm des Doppelmetallcyanid (DMC)-Katalysators ist keine katalytische Umsetzung mehr zu beobachten.

Ein Charakteristikum des DMC-Katalysators ist die spezifische "catch-up" Kinetik (M. Ionescu; Chemistry and Technology of Polyols for Polyurethanes 2^{nd} Edition, Rapra Techn. Ltd., 2016 Abschnitt 5.1), wobei für Gemische aus H-funktionellen Startersubstanzen aus einem niedrigen Äquivalentgewicht und einem hohen Äquivalentgewicht, die Alkoxylierung, im Speziellen die Propoxylierung, bevorzugt an der H-funktionellen Startersubstanz mit dem niedrigeren Äquivalentgewicht erfolgt.

Im erfindungsgemäßen Verfahren werden Suspensionsmittel mit H-funktionellen Gruppen oder Suspensionsmittel ohne H-funktionelle Gruppen, bevorzugt Suspensionsmittel ohne H-funktionelle Gruppen verwendet.

Die eingesetzten Suspensionsmittel in einer bevorzugten Ausführungsform keine H-funktionellen Gruppen. Als Suspensionsmittel ohne H-funktionelle Gruppen sind alle polar-aprotischen, schwach polar-aprotischen und unpolar-aprotischen Lösungsmittel geeignet, die jeweils keine H-funktionellen Gruppen enthalten. Als Suspensionsmittel kann auch eine Mischung aus zwei oder mehreren dieser Suspensionsmittel eingesetzt werden.

In einer Ausführungsform des erfindungsgemäßen Verfahrens ist in Schritt (a) das Suspensionsmittel, dass keine H-funktionellen Gruppen enthält eine oder mehrere Verbindung(en) ist und ausgewählt wird aus der Gruppe bestehend aus 4-Methyl-2-oxo-1,3-dioxolan, 1,3-Dioxolan-2-on, Aceton, Methylethylketon, Acetonitril, Nitromethan, Dimethyl¬sulf¬oxid, Sulfolan, Dimethylformamid, Dimethylacetamid, N-Methylpyrrolidon, Dioxan, Diethylether, Methyl-tert-Butylether, Tetrahydrofuran, Essigsäureethylester, Essigsäurebutylester, Pentan, n-Hexan, Benzol, Toluol, Xylol, Ethylbenzol, Chloroform, Chlorbenzol, Dichlorbenzol und Tetra¬chlor¬kohlenstoff.

Bevorzugt als Suspensionsmittel, dass keine H-funktionellen Gruppen enthält, werden 4-Methyl-2-oxo-1,3-dioxolan, 1,3-Dioxolan-2-on, Toluol, Xylol, Ethylbenzol, Chlorbenzol und Dichlorbenzol sowie Mischungen zweier oder mehrerer dieser Suspensionsmittel eingesetzt, besonders bevorzugt ist 4-Methyl-2-oxo-1,3-dioxolan und 1,3 Dioxolan-2-on und Toluol oder eine Mischung aus 4-Methyl-2-oxo-1,3-dioxolan und 1,3 Dioxolan-2-on und/oder Toluol. Es ist ebenfalls auch möglich als Suspensionsmittel eine weitere Starterverbindung, welche unter den Reaktionsbedingungen in flüssiger Form vorliegt, im Gemisch mit der polymeren Formaldehyd-Starterverbindung einzusetzen.

In einer alternativen Ausführungsform des erfindungsgemäßen Verfahrens wird in Schritt (a) ein Suspensionsmittel, das H-funktionelle Gruppen enthält, gemeinsam mit DMC-Katalysator im Reaktor vorgelegt. In einer bevorzugten Ausführungsform ist das Suspensionsmittel, das H-funktionelle Gruppen enthält enthaltend den DMC-Katalysator, ein Polyoxymethylen-Polyoxyalkylen-Copolymer erhältlich aus einer zeitlich vorangegangenen Herstellungsverfahren enthaltend einen aktivierten DMC-Katalysator. Hierdurch werden mögliche Abtrennungsschritte im Vergleich zum Einsatz eines Suspensionsmittels dass keine H-funktionelle Gruppen aufweist eingepart, wodruch ein einfacheres und effizienteres Verfahren resultiert.

Ein weiterer Gegenstand der vorliegenden Erfindung sind Polyoxymethylen-Copolymere, erhältlich durch das erfindungsgemäße Verfahren.

Das Molekulargewicht der erfindungsgemäßen Polyoxymethylen-Copolymere ergibt sich insbesondere additiv aus dem Molekulargewicht der polymeren Formaldehyd-Starterverbindung und den aufpolymerisierten Blöcken. In einer Ausführungsform weisen die Polyoxymethylen-Copolymere ein zahlenmittleres Molekulargewicht von ≤ 15000 g/mol, bevorzugt ≤ 9500 g/mol, besonders bevorzugt ≤ 6000 g/mol, ganz besonders bevorzugt ≤ 5000 g/mol, insbesondere von 200 g/mol bis 9500 g/mol, bevorzugt von 500 g/mol bis 5000 g/mol auf. Das zahlenmittlere Molekulargewicht lässt sich beispielsweise per Gel-Permeations-Chromatographie (GPC) gegen z.B. Polystyrol-Standards und/oder über experimentell ermittelte Hydroxylzahlen (OH#) bestimmen.

Die erfindungsgemäßen Polyoxymethylen-Copolymere besitzen vorzugsweise terminale Hydroxy-Gruppen und haben vorzugsweise eine Funktionalität F ≥ 2 (Anzahl an Hydroxy-Gruppen pro Molekül).

In einer weiteren Ausführungsform der Polyoxymethylen-Copolymere haben diese eine monomodale Molekulargewichtsverteilung und einen Polydispersitätsindex (PDI) von ≤ 2,5, bevorzugt ≤ 2,2.

Die nach dem erfindungsgemäßen Verfahren erhältlichen Polyoxymethylen- Copolymere enthalten vorzugsweise weniger als 1.0 Gew.-%, insbesondere weniger als 0.5 Gew.-% bezogen auf die Gesamtmasse des erhaltenen Polyoxymethylen-Copolymers, Formiat und/oder Methoxy-Verunreinigungen. Die nach dem erfindungsgemäßen Verfahren erhältlichen Polyoxymethylen-Blockcopolymere weisen im Allgemeinen einen geringen Gehalt an Neben- und Zersetzungsprodukten, wie Formiat, Methoxy-Spuren, monomeres und oligomeres Formaldehyd, Restmonomere auf und können problemlos verarbeitet werden, insbesondere durch Umsetzung mit Di-, Tri und/oder Polyisocyanaten zu Polyurethanen, Isocyanat-funktionalisierten Polyurethan-Präpolymeren oder Polyisocyanuraten, insbesondere Polyurethan-Thermoplasten, Polyurethan-Beschichtungen, -Fasern, -Elastomeren, -Klebstoffen sowie insbesondere auch PolyurethanSchaumstoffen eingeschlossen Weich- (wie beispielsweise Polyurethan-Weichblockschaumstoffe und Polyurethan-Weichformschaumstoffe) und Hartschäume. Für Polyurethananwendungen werden vorzugsweise Polyoxymethylen-Copolymere eingesetzt, welche eine Funktionalität von mindestens 2 aufweisen. Des Weiteren können die nach dem erfindungsgemäßen Verfahren erhältlichen Polyoxymethylen-Copolymere in Anwendungen wie Wasch- und Reinigungsmittelformulierungen, Klebstoffen, Farben, Lacken, Funktionsfluiden, Bohrflüssigkeiten, Kraftstoffadditiven, ionischen und nicht-ionischen Tensiden, Schmiermitteln, Prozesschemikalien für die Papier- oder Textilherstellung oder kosmetischen / medizinischen Formulierungen verwendet werden. Dem Fachmann ist bekannt, dass abhängig vom jeweiligen Anwendungsgebiet die zu verwendenden Polymere gewisse Stoffeigenschaften wie beispielsweise Molekulargewicht, Viskosität, Polydispersität, Funktionalität und/oder Hydroxylzahl (Anzahl an terminalen Hydroxy-Gruppen pro Molekül) erfüllen müssen.

Die Erfindung betrifft daher ebenfalls die Verwendung von erfindungsgemäßen Polyoxymethylen-Copolymeren zur Herstellung von Polyurethan-Polymeren. In einer Ausführungsform dieser Verwendung sind die Polyurethan-Polymere Polyurethan-Weichschaumstoffe oder Polyurethan-Hartschaumstoffe. In einer weiteren Ausführungsform dieser Verwendung sind die Polyurethan-Polymere thermoplastische Polyurethan-Polymere.

Gegenstand der Erfindung ist daher ebenfalls ein Polyurethan-Polymer erhältlich durch Umsetzung eines Di-, Tri- und/oder Polyisocyanats mit wenigstens einem erfindungsgemäßen Polyoxymethylen-Block-Copolymer.

Gegenstand der Erfindung ist ebenfalls ein Polyurethan-Weichschaumstoff oder ein Polyurethan-Hartschaumstoff erhältlich durch Umsetzung eines Di-, Tri- und/oder Polyisocyanats mit wenigstens einem erfindungsgemäßen Polyoxymethylen-Copolymer.

Erfindungsgemäß eingeschlossen ist auch die Verwendung von Polyoxymethylen-Copolymeren gemäß der vorliegenden Erfindung zur Herstellung von Polyurethanen, Wasch- und Reinigungsmittelformulierungen, Bohrflüssigkeiten, Kraftstoffadditiven, ionischen und nicht-ionischen Tensiden, Schmiermitteln, Prozesschemikalien für die Papier- oder Textilherstellung oder kosmetischen Formulierungen.

### Beispiele

### Eingesetzte Verbindungen:

Es wurde Paraformaldehyd (kurz pFA) der Bezeichnung Granuform® M der Firma Ineos eingesetzt. Propylenoxid (kurz PO; Reinheit ≥ 99 %), 4-Methyl-2-oxo-1,3-dioxolan (cyclisches Propylencarbonat oder kurz cPC; Reinheit ≥ 99 %) und Toluol (trocken, Reinheit 99,8 %) wurden von der Sigma-Aldrich Chemie GmbH bezogen und ohne Aufreinigung eingesetzt. Als Katalysator wurde bei allen Beispielen ein DMC-Katalysator hergestellt gemäß Beispiel 6 in WO 01/80994 A1, enthaltend Zinkhexacyanocobaltat, tert.-Butanol und Polypropylenglykol mit einem zahlenmittleren Molekulargewicht von 1000 g/mol, eingesetzt.

### Methodenbeschreibung:

### ¹H-NMR-Analytik:

Die Zusammensetzung der Reaktionsmischungen wurden mittels ¹H-NMR (Firma Bruker, DPX 400, 400 MHz; Pulsprogramm zg30, Wartezeit D1: 10s, 64 Scans) bestimmt. Die Probe wurde jeweils in deuteriertem Chloroform gelöst. Die relevanten Resonanzen im ¹H-NMR (bezogen auf TMS = 0 ppm) und die Zuordnung der Flächenintegrale (A) ergeben sich wie folgt:
- cyclisches Propylencarbonat (cPC) mit Resonanz bei 4,5 ppm, Flächenintegral entspricht einem H-Atom;
- Toluol (sofern nicht durch Aufarbeitung unter Vakuum vollständig entfernt) mit Resonanzen bei 7,1 bis 7,3 und 2,3 ppm, Flächenintegral entspricht 8 H-Atomen;
- monomeres Propylenoxid (PO), welches nicht abreagiert vorliegt (sofern nicht durch Aufarbeitung unter Vakuum vollständig entfernt), mit Resonanz bei 2,4 bzw. 2,75 ppm, Flächenintegral entspricht jeweils einem H-Atom;
- Polypropylenoxid (PPO), PO-Homopolymer, mit Resonanzen bei 1,0 bis 1,2 ppm, Flächenintegral entspricht 3 H-Atomen;
- Poly- bzw. Paraformaldehyd (pFA) mit Resonanzen bei 4,6 bis 5,2 ppm, Flächenintegral entspricht 2 H-Atomen. In Anwesenheit von cPC, zusätzlich minus ein H-Atom des cyclischen Propylencarbonats (cPC).;
- Formiat (HCOO), Nebenprodukt, mit Resonanz bei 8,1 ppm, Flächenintegral entspricht einem H-Atom;
- Methoxy (MeO), Nebenprodukt, mit Resonanz bei 3,4 ppm, Flächenintegral entspricht 3 H-Atomen;

Die Ermittlung der Molenanteile (x) der Reaktionsmischung erfolgt wie folgt:
- x(cPC) = A(4,5 ppm)
- x(Toluol) = A(7,1 - 7,3 ppm)/5
- x(PO) = A(2,75 ppm) oder A(2,4 ppm)
- x(PPO) = A(1,0-1,2 ppm)/3
- x(pFA) = (A(4,6-5,2 ppm)/2
- In Anwesenheit von cPC gilt: x(pFA) = (A(4,6-5,2 ppm))/2 - x(cPC)
- x(HCOO) = A(8,1 ppm)
- x(MeO) = A(3,4 ppm)/3

Der prozentuale Molanteil wird errechnet, in dem der Molanteil (x) der jeweiligen Komponente durch die Summe der in der Probe enthaltenen Molteile geteilt wird. Zusätzlich wird der Gewichtsanteil berechnet, in dem die Molanteile (x) mit den zugehörigen Molmassen multipliziert werden und durch die Summe der enthaltenen Gewichtsteile geteilt wird. Zur Umrechnung der Gewichtsanteile werden folgende Molmassen (g/mol) verwendet: cPC = 102, Toluol = 92, PO und PPO = 58, pFA = 30, HCOO = 45, MeO = 31. Die Polymerzusammensetzung wird anhand der Anteile PPO und pFA berechnet und normiert, so dass auch hier die Angabe in Gewichtsteilen von 100 (Gew.-%) erfolgt.

### Gel-Permeations-Chromatographie (GPC)

Das Gewichts- und Zahlenmittel des Molekulargewichts Mw und Mn der entstandenen Polymere wurde mittels Gel-Permeations-Chromatographie (GPC) bestimmt. Es wurde in Anlehnung an DIN 55672-1 vorgegangen: "Gelpermeationschromatographie, Teil 1 - Tetrahydrofuran als Elutionsmittel". Dabei wurden Polystyrolproben bekannter Molmasse zur Kalibrierung verwendet. Der Polydispersitätsindex (kurz PDI) berechnet sich aus dem der Quotienten des gewichtsmittleren und zahlenmittleren Molekulargewichtes.

### Beispiel 1: Herstellung des Polyoxymethylen-Polyalkylenoxid-Copolymer mit DMC-Gesamtkatalysatorbeladung von 500 ppm und kontinuierlicher pFA- und PO-Zugabe in Schritt γ

Es wurde ein Glas-Planschliffreaktor ausgestattet mit Doppelmantel, innenliegendem Temperaturfühler, mehrstufigem Rührwerk, Bodenablass, Intensivkühler, Zellschleusenförderer zur kontinuierlichen Dosierung von pFA, Flüssigkeitsdosierung zur kontinuierlichen Zugabe von PO und Stickstoffüberschleierung verwendet. In den inertisierten Reaktor wurden 152 g cPC und 100 mg DMC-Katalysator, der nicht aktiviert ist, vorgelegt, gerührt, auf 95 °C erhitzt und ein Stickstoffstrom von 300 L/h eingeregelt. 30 min später wurde der Intensivkühler in Betrieb genommen und der Stickstoffstrom gestoppt. Nun wurden 10 g PO mit 10 g/min schnell addiert. Das Einsetzen der Reaktion machte sich durch eine Temperaturspitze ("Hotspot") bemerkbar. Zur weiteren Aktivierung wurden weitere zwei Mal je 10 g PO in analoger Weise zugegeben. Auch hier konnte jeweils eine Temperaturspitze ("Hotspot") beobachtet werden. Anschließend erfolgte zeitgleich die Dosierung von 170 g PO mit einer kontinuierliche Dosierrate von 0,7 g/min sowie von 50 g pFA mit einer kontinuierlichen Dosierrate von 0,28 g/min., Nach dem Beginn der kontinuierlichen Dosierung von pFA und PO wurde eine Reaktionstemperatur von 90 °C eingeregelt. 74 min nach der Beendigung der PO-Zugabe wurde der Rührer gestoppt, die Reaktionsmischung entnommen und am Rotationsverdampfer bei 60 °C und 10 mbar von flüchtigen Bestandteilen befreit und mittels GPC- und NMR-Analytik untersucht.
Mₙ(GPC) = 2263 g/mol
PDI = 1,32
Laut NMR wurde ein Formaldehyd-Anteil im Polymer von 20,2 wt.-% ermittelt. Der Anteil an Formiat und Methoxy-Endgruppen lag laut NMR in Summe unter 0,5 wt.-%.

### Beispiel 2 (Vergleich): Herstellung des Polyoxymethylen-Polyalkylenoxid-Copolymer mit DMC-Gesamtkatalysatorbeladung von 2000 ppm und nur kontinuierlicher PO-Zugabe in Schritt γ

1400 mg getrockneter DMC-Katalysator, der nicht aktiviert ist, wurde in 200,0 g cPC in einem 1,0 L Druckreaktor suspendiert. Die Suspension wurde unter Rühren auf 130 °C erhitzt. Gleichzeitig wurde für 30 min ein Vakuum angelegt und der Druck mit einem konstanten Volumenstrom von Stickstoff durch den Reaktor auf 100 mbar eingestellt (sogenanntes Vakuumstrippen). Nach beendetem Vakuumstrippen wurde die Vakuumpumpe deaktiviert und der Reaktor auf Raumtemperatur abgekühlt und mittels Stickstoff auf Umgebungsdruck eingestellt. Zu der Suspension wurden 157,2 g pFA hinzugefügt und der Reaktor erneut verschlossen. Die Reaktorinnentemperatur wurde auf 70 °C eingestellt. Zu der Suspension wurden 160 g PO mit einer Förderrate von 10 g/min schnell addiert. Das Einsetzen der Reaktion machte sich durch eine Temperaturspitze ("Hotspot") verbunden mit gleichzeitigem Druckabfall bemerkbar. Anschließend erfolgte die Dosierung von 363 g PO mit einer kontinuierlichen Dosierrate von 3 g/min. Nach beendeter Zugabe wurde bis zum Abklingen der exothermen Reaktion und bis zur Druckkonstanz bei 70 °C gerührt. Anschließend wurde die Reaktionsmischung entnommen und am Rotationsverdampfer bei 60 °C und 10 mbar von flüchtigen Bestandteilen befreit und mittels GPC- und NMR-Analytik untersucht.
Mₙ(GPC) = 3156 g/mol
PDI = 1,23
Laut NMR wurde ein Formaldehyd-Anteil im Polymer von 23,5 wt.-% ermittelt. Der Anteil an Formiat und Methoxy-Endgruppen lag laut NMR in Summe unter 1,0 wt.-%.

### Beispiel 3 (Vergleich): Herstellung des Polyoxymethylen-Polyalkylenoxid-Copolymer mit DMC-Gesamtkatalysatorbeladung von 810 ppm und nur kontinuierlicher PO-Zugabe in Schritt γ

500 mg getrockneter DMC-Katalysator, der nicht aktiviert ist, wurde in 250,0 g Toluol in einem 1,0 L Druckreaktor suspendiert. Die Suspension wurde unter Rühren auf 130 °C erhitzt. Es wurden 40 bar N₂ aufgepresst und anschließend der N₂ Druck auf 15 bar gesenkt. Das Aufpressen und Ablassen von N₂ wurde in gleicher Weise noch zweimal durchgeführt (sogenanntes Druckstrippen). Nach beendetem Druckstrippen wurde der Reaktor auf Raumtemperatur abgekühlt und mittels Stickstoff auf Umgebungsdruck eingestellt. Zu der Suspension wurden 112,3 g pFA hinzugefügt und der Reaktor erneut verschlossen. Anschließend erfolgte erneutes Druckstrippen bei Raumtemperatur. Die Reaktorinnentemperatur wurde auf 70 °C eingestellt. Nach Erreichen der Temperatur wurde zu der Suspension 120 g PO mit einer Förderrate von 10 g/min schnell addiert. Das Einsetzen der Reaktion machte sich durch eine Temperaturspitze ("Hotspot") verbunden mit gleichzeitigem Druckabfall bemerkbar. Anschließend erfolgte die Dosierung von 377 g PO mit einer kontinuierliche Dosierrate von 3 g/min. Nach beendeter Zugabe wurde bis zum Abklingen der exothermen Reaktion und bis zur Druckkonstanz bei 70 °C gerührt. Anschließend wurde die Reaktionsmischung entnommen und am Rotationsverdampfer bei 60 °C und 10 mbar von flüchtigen Bestandteilen befreit und mittels GPC- und NMR-Analytik untersucht.
Mₙ(GPC) = 3441 g/mol
PDI = 1,21
Laut NMR wurde ein Formaldehyd-Anteil im Polymer von 17,7 wt.-% ermittelt. Der Anteil an Formiat und Methoxy-Endgruppen lag laut NMR in Summe unter 1,0 wt.-%.

### Beispiel 4 (Vergleich): Herstellung des Polyoxymethylen-Polyalkylenoxid-Copolymer mit DMC-Gesamtkatalysatorbeladung von 500 ppm und nur kontinuierlicher PO-Zugabe in Schritt γ

Der Versuch wurde analog zu Beispiel 3 durchgeführt die dabei gewählte Katalysatorbeladung entsprach 500 ppm. Nach der schnellen Addition von 120 g PO (Aktivierung) konnte über einen Zeitraum von 8 Stunden weder eine exotherme Reaktion noch ein Druckabfall beobachtet werden. Anschließend wurde die Reaktionsmischung entnommen und mittels GPC- und NMR-Analytik untersucht. Dabei konnten kein kettenverlängertes Produkt nachgewiesen werden.

**Tabelle 1**

| Beispiel | Suspensionsmittel | kontinuierliche Zugabe in Schritt γ | Katalysatorbeladung^{a)} [ppm] | Mₙ(GPC), g/mol)^{b)} | PDI | Formaldehyd-Anteil im Polymer [wt.-%]^{d} | Anteil von Formiat und Methoxy-Endgruppen [wt.-%]^{e} |
|---|---|---|---|---|---|---|---|
| 1 | cPC | pFA und PO | 500 | 2263 | 1,32 | 20,2 | < 0,5 |
| 2 (Vgl.) | cPC | PO | 2000 | 3156 | 1,23 | 23,5 | < 1,0 |
| 3 (Vgl.) | Toluol | PO | 810 | 3441 | 1,21 | 17,7 | < 1,0 |
| 4 (Vgl.) | Toluol | PO | 500 | -^{c)} | - | - | - |

| | | | | | | | |
|---|---|---|---|---|---|---|---|
| ^{a)}DMC-Katalysatorbeladung bezogen auf die Summe der Massen der polymeren Formaldehydverbindung und des Alkylenoxids, ^{b)} zahlenmittleres Molekulargewicht des Polyoxymethylen-Polyoxyalkylen-Copolymers, ^{c)}kein kettenverlängertes Produkt wurde erhalten, ^{d)}mittels NMR bestimmt, ^{e)}Summe mittels NMR bestimmt bezogen auf das Reaktionsgemisch | | | | | | | |

## Patentansprüche

1. Verfahren zur Herstellung eines Polyoxymethylen-Polyoxyalkylen-Copolymers umfassend der Reaktion einer polymeren Formaldehydverbindung mit einem Alkylenoxid in Gegenwart eines Doppelmetallcyanid (DMC)-Katalysators;
wobei die polymere Formaldehydverbindung wenigstens eine terminale Hydroxylgruppe aufweist;
umfassend folgende Schritte:
(α) ein Suspensionsmittel, dass in einem Reaktor vorgelegt wird und
(γ) die polymere Formaldehydverbindung während der Reaktion stufenweise oder kontinuierlich in den Reaktor zudosiert wird.

2. Verfahren gemäß Anspruch 1, wobei anschließend an Schritt (α)
(β) zu dem Gemisch aus Schritt (α) eine Teilmenge an Alkylenoxid bei Temperaturen von 50 bis 120 °C bevorzugt von 55 bis 110 °C und besonders bevorzugt von 60 bis 100 °C zugegeben wird, und wobei dann die Zugabe der Alkylenoxidverbindung unterbrochen wird.

3. Verfahren gemäß Anspruch 1 oder 2, wobei in Schritt (γ) die polymere Formaldehydverbindung und das Alkylenoxid kontinuierlich dosiert werden.

4. Verfahren gemäß einem der Ansprüche 1 bis 3, wobei in Schritt (γ) die Dosierung der einen oder mehreren polymeren Formaldehydverbindung(en) zeitlich vor der Zugabe des Alkylenoxids beendet wird.

5. Verfahren gemäß einem der Ansprüche 1 bis 4, wobei in Schritt (γ) das resultierende Reaktionsgemisch kontinuierlich aus dem Reaktor entfernt wird.

6. Verfahren gemäß einem der Ansprüche 1 bis 5, wobei in Schritt (γ) DMC-Katalysator kontinuierlich in den Reaktor dosiert wird und das resultierende Reaktionsgemisch kontinuierlich aus dem Reaktor entfernt wird.

7. Verfahren gemäß einem der Ansprüche 1 bis 6, wobei in Schritt (α) das Suspensionsmittel keine H-funktionellen Gruppen enthält.

8. Verfahren gemäß Anspruch 7, wobei in Schritt (α) ein Suspensionsmittel, das keine H-funktionellen Gruppen enthält, gemeinsam mit DMC-Katalysator im Reaktor vorgelegt wird.

9. Verfahren gemäß einem der Ansprüche 1 bis 8, wobei in Schritt (α) das Suspensionsmittel, dass keine H-funktionellen Gruppen enthält eine oder mehrere Verbindung(en) ist und ausgewählt wird aus der Gruppe bestehend aus 4-Methyl-2-oxo-1,3-dioxolan, 1,3-Dioxolan-2-on, Aceton, Methylethylketon, Acetonitril, Nitromethan, Dimethylsulfoxid, Sulfolan, Dimethylformamid, Dimethylacetamid, N-Methylpyrrolidon, Dioxan, Diethylether, Methyl-tert-Butylether, Tetrahydrofuran, Essigsäureethylester, Essigsäurebutylester, Pentan, n-Hexan, Benzol, Toluol, Xylol, Ethylbenzol, Chloroform, Chlorbenzol, Dichlorbenzol und Tetrachlorkohlenstoff.

10. Verfahren gemäß einem der Ansprüche 1 bis 9, wobei das Alkylenoxid eine oder mehrere Verbindung(en) ist und ausgewählt wird aus der Gruppe bestehend aus Ethylenoxid, Propylenoxid, Styroloxid und Cyclohexenoxid bevorzugt Ethylenoxid und Propylenoxid und besonders bevorzugt Propylenoxid.

11. Verfahren gemäß einem der Ansprüche 1 bis 10, wobei die polymere Formaldehydverbindung 2 Hydroxylgruppen und 8 bis 100 Oxymethylen-Wiederholungseinheiten (n) oder 3 Hydroxylgruppen und 8 bis 100 Oxymethylen-Wiederholungseinheiten (n) aufweist.

12. Verfahren gemäß einem der Ansprüche 1 bis 11, wobei Schritt (γ) bei einer Temperatur von 50 bis 120 °C bevorzugt von 60 bis 110 °C und besonders bevorzugt von 70 bis 100 °C erfolgt.

13. Verfahren gemäß einem der Ansprüche 1 bis 12, wobei der Doppelmetallcyanid (DMC)-Katalysator in einer theoretischen Menge von 50 bis 800 ppm, bevorzugt von 100 bis 700 ppm besonders bevorzugt von 150 bis 700 bezogen auf die Summe der Massen der polymeren Formaldehydverbindung und des Alkylenoxids eingesetzt wird.
